(19) **Europäisches Patentamt**
**European Patent Office**
**Office européen des brevets**

(11) **EP 3 896 609 A1**

(12) **EUROPEAN PATENT APPLICATION**

(43) Date of publication:
**20.10.2021 Bulletin 2021/42**

(51) Int Cl.:
**G06K 9/46** *(2006.01)*      **G06K 9/00** *(2006.01)*
**G06K 9/62** *(2006.01)*

(21) Application number: **20195367.6**

(22) Date of filing: **09.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.04.2020 HK 22020006081**

(71) Applicant: **Neo Derm Group Limited**
**Island East (HK)**

(72) Inventor: **Lee, Ho Cheung**
**Island East (HK)**

(74) Representative: **Isern Patentes y Marcas S.L.**
**Avda. Diagonal, 463 Bis, 2°**
**08036 Barcelona (ES)**

(54) **METHOD FOR FACIAL SKIN AGE ESTIMATING AND ELECTRONIC DEVICE**

(57)      A method for facial skin age estimating and electronic device. The method includes: adjusting illumination component and color component of a facial image depending on a reference image; analyzing a plurality of evaluation index for assessing skin condition on interest area of the facial image and estimating the skin age of the facial image, according to the evaluation index.

EP 3 896 609 A1

Receiving a reference image and an input image — 110

Resizing the input image — 120

Converting the input image and the reference image from RGB color space to CIELAB color space — 130

Adjusting illumination component and color component of the input image depending on the reference image — 140

Recovering the adjusted input image from CIELAB color space to RGB color space — 150

FIG. 1

**Description**

TECHNICAL FIELD

The present disclosure relates to the technical field of image processing, and in particular, relates to a method for facial skin age estimating and electronic device.

BACKGROUND

Assessment of skin condition is important for skin care and treatment. Because small variation may cause significant error and inconsistency, the facial image for assessing has to take by high-quality and specially-designed cameras under controlled environmental settings such as face distance from camera, head pose angles, surrounding light color and intensity.

The strict requirement of facial image leads to inconvenience. Users need to book an appointment or travel to the center where there are professional equipment (i.e. VISIA) to assess their skin condition.

Instead of traveling to the center, users may take image by themselves, according to the guidelines on how to take acceptable photos. However, in an uncontrolled or open environment, it is difficult to guarantee that the face distance, illumination condition, etc. are well maintained every time.

SUMMARY

An embodiment of the present disclosure provides a method for image preprocessing. The method includes: resizing an input image; importing a reference image; converting the input image and the reference image from RGB color space to CIELAB color space; adjusting illumination component and color component of the input image depending on the reference image and recovering the adjusted input image from CIELAB color space to RGB color space.

Another embodiment of the present disclosure provides a method for facial skin age estimating. The method includes: resizing and aligning a facial image; converting the facial image and a reference image from RGB color space to CIELAB color space; adjusting illumination component and color component of the facial image depending on the reference image; recovering the adjusted facial image from CIELAB color space to RGB color space ; analyzing a plurality of evaluation index for assessing skin condition on interest area of the facial image and estimating the skin age of the facial image, according to the evaluation index.

Still another embodiment of the present disclosure provides an electronic device. The electronic device includes: a memory, a communication module and a processor coupled to the memory and the communication module; the memory storing instructions that are executable by the processor, wherein execution of the instructions by the processor causes the processor via the communication module to: resizing and aligning a facial image; converting the facial image and a reference image from RGB color space to CIELAB color space; adjusting illumination component and color component of the facial image depending on the reference image; recovering the adjusted facial image from CIELAB color space to RGB color space; analyzing a plurality of evaluation index for assessing skin condition on interest area of the facial image and estimating the skin age of the facial image, according to the evaluation index.

BRIEF DESCRIPTION OF THE DRAWINGS

One or more embodiments are illustrated by way of example, and not by limitation, in the figures of the accompanying drawings, wherein components having the same reference numeral designations represent like components throughout. The drawings are not to scale, unless otherwise disclosed.

FIG. 1 is a flow chart of a method for input image preprocessing according to an embodiment of the present disclosure;
FIG. 2 is a work flow diagram of a method for illumination and color component adjusting according to an embodiment of the present disclosure;
FIG.3 is a diagram of the correlation of the wrinkles count with age according to an embodiment of the present disclosure;
FIG.4 is a diagram of the schematic reflection model of skin according to an embodiment of the present disclosure;
FIG.5 is a flow chart of a method for estimating concentration of the melanin and the hemoglobin according to an embodiment of the present disclosure;
FIG.6 is a diagram of spectral absorption of melanin and hemoglobin from 400nm to 1,000nm, and their relation with spectral responses of conventional RGB digital cameras.
FIG.7 is a diagram of the projection of the image signals onto the color plane which is formed by the two principal components, melanin and hemoglobin according to an embodiment of the present disclosure;

FIG.8 is a flow chart of a method for localizing the wrinkles of the processed image according to an embodiment of the present disclosure;

FIG.9 is a structural block diagram of the application environment of the method for skin age estimating according to an embodiment of the present disclosure.

DETAILED DESCRIPTION

In order to make the objectives, technical solutions, and advantages of the present disclosure clearer, the present disclosure is further described in detail below by reference to the embodiments and the accompanying drawings. It should be understood that the specific embodiments described herein are only intended to explain the present application instead of limiting the present application.

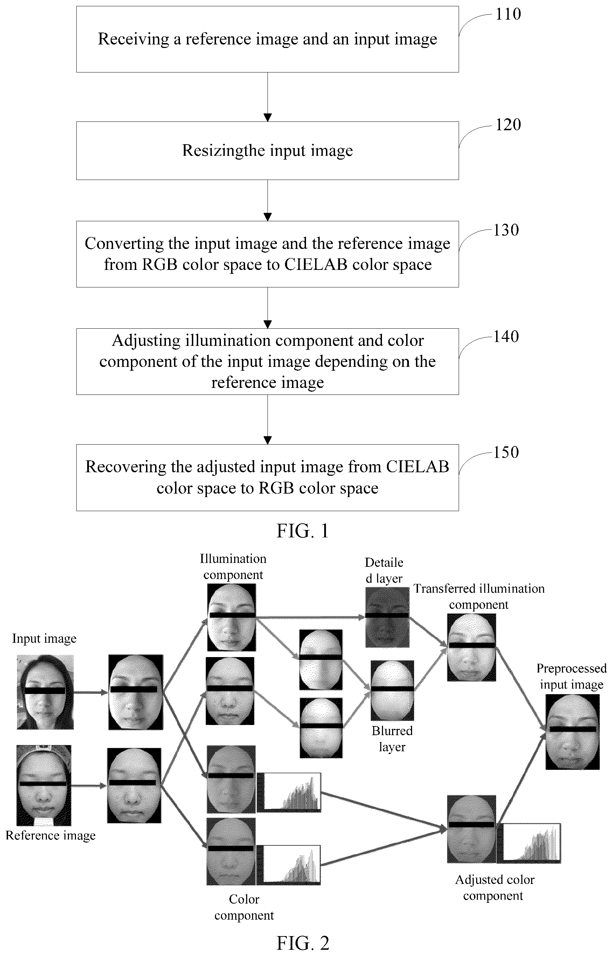

Embodiments of the present disclosure provide a method for image preprocessing. The preprocessing method could decrease the influence cause by the environment. As illustrated in FIG.1, the method for image preprocessing includes the follow steps:

110: An image process system receives a reference image and an input image.

The image process system may be implemented by any suitable type of electronic device with ability of complicated operation. The reference image is pre-defined image which is taken in standard environment. The input image may be taken by any terminal device, such as smart phone, in open environment.

120: The image process system resizes the input image.

The input image with different size or resolution ratio has to resize in uniform size for further processing.

130: The image process system converts the input image and the reference image from RGB color space to CIELAB color space.

RGB color space is a kind of color standard. It can get all kinds of colors through the proportion of the red(R) component, green(G) component, and blue(B) component and their superposition.

CIELAB color space is another kind of color standard establish by Commission International de l'éclairage (CIE), which is also called L*a*b model. The L*a*b model consist of illumination(L) component, a component and b component. The illumination component indicates the brightness of the image. The "a component" and the "b component" is color component.

140: The image process system adjusts illumination component and color component of the input image depending on the reference image.

In L*a*b color space, the brightness and the color of the input image can be adjusted to meet a standard defined by the reference image such that the open environment influence is avoided.

150: The image process system recovers the adjusted input image from CIELAB color space to RGB color space.

For subsequent processing, the adjusted input image should be recovered to RGB color space. The method of different color space conversion is well known to those in the technical field.

As illustrated in FIG.2, the method for input image adjusting includes two major part. The first part is adjusting the illumination component. The second part is adjusting the color component.

To adjust the illumination component, the illumination component of the input image needs to divide into an input detailed layer and an input blurred layer.

In one embodiment, the weighted least square filters, which has property of edge-preserving, can be employed to smooth the two lightness components to obtain blurred layers and then use division to obtain the detailed layer.

Correspondingly, a reference blurred layer is extracted from the illumination component of the reference image.

The input blurred layer can be transferred, according to the reference blurred layer such that the brightness of the input image is closed to the reference image.

In one embodiment, the reference blurred layer is filtered by guided filter with the guidance of the input blurred layer for integrating the input image and reference image.

Finally, a transferred illumination component is generated by combining the transferred input blurred layer and the input detailed layer.

To adjust the color component, the color component of the input image is standardized depending on the color component of the reference image.

As described below, the a* and b* are color chromaticity component. The statistics and color correction depending on the reference image, can be applied to the a* and b* components respectively.

The adjusted color component of the input image could combine with the transferred illumination component to generate a preprocessed input image. The preprocessed input image should be further used to estimate the skin age when the input image is a facial image taken by any portable electronic device.

To estimate the skin age, the electronic device may analyze a plurality of evaluation index for assessing skin condition on interest area of the facial image.

Any suitable evaluation index can be used. Different evaluation index may focus on different aspect of the facial skin age and need to use different area for analyzing.

Finally, the electronic device can estimate the skin age of the facial image, according to the evaluation index.

In one embodiment, the method for estimating skin age further includes follows steps:

Firstly, a benchmark from modeling the relationship between mean value of the evaluation index and an age group is generating.

Secondly, the evaluation index of the facial image is compared with the benchmark.

Thirdly, the age group corresponding to the image is determined according to the comparison result of the facial image and the benchmark.

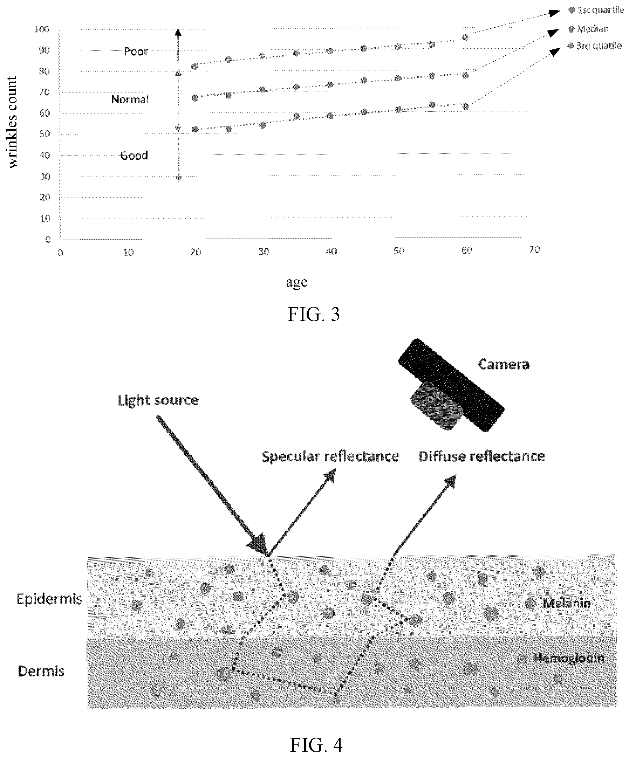

As shown in FIG.3, the abscissa of coordinate system is age and the ordinate of the coordinate system is the value of the evaluation index (i.e. wrinkles count).

The benchmark is a region defined by several straight lines. The straight lines are also indicated the liner relationship between evaluation index and age group.

In one embodiment, the evaluation index includes melanin concentration, hemoglobin concentration, wrinkles count and sagging seriousness. The details of each evaluation index are described as follow.

The melanin concentration and the hemoglobin concentration could measure the Brown spots and Red areas on the facial image. In other words, the area of the facial image could be determined as brown spots and red areas, when the melanin concentration and the hemoglobin concentration is higher than a pre-defined threshold.

In one embodiment, the interest area of melanin and the hemoglobin analyzing is the whole face excluding area around mouth and chin.

As illustrated in FIG. 4, the intensity of the incident light is decreased according to following attenuation factors when reflected by skin. One of attenuation factors comes from the attenuation caused by Lambertian reflection associated with asperity of skin surface. The other comes from the attenuation caused by absorption through skin pigmentations, melanin and hemoglobin, which are predominantly found in the epidermis and dermis respectively.

For each color (e.g. red, green, blue), the response on the digital camera sensor for a pixel i of the input image is expressed as Equation (1) below:

$$R_n^i = \int Q_n^i(\lambda) \cdot E^i(\lambda) \cdot 10^{-\left(\alpha_{mel}^i \varepsilon_{mel}(\lambda) + \alpha_{hem}^i \varepsilon_{hem}(\lambda)\right)} \cdot \gamma^i \, d\lambda \tag{1}$$

where $n = R, G, B$. $R_n^i$ represents the color response for color n (e.g. red, green, blue), $\lambda$ is wavelength, $Q_n^i(\lambda)$ represents the spectral sensitivity of the camera, $E^i(\lambda)$ represents the spectral power distribution of the illuminate, $\varepsilon_{mel}(\lambda)$, $\varepsilon_{hem}(\lambda)$, $\alpha_{mel}^i$, $\alpha_{hem}^i$ represents absorption spectra and density of melanin and hemoglobin respectively, $\gamma^i$ is asperity factor of the skin surface which represent the normal direction associated with Lambertian reflection.

Normally, it can assume that incident light is uniform in local area and spectral sensitivity functions are identical throughout camera sensors.

The density of melanin and hemoglobin can be estimated according to the intensity of the incident light and narrowband assumption is applied so that the spectral sensitivities of camera sensors can be approximated by delta functions, with the property of RGB camera,

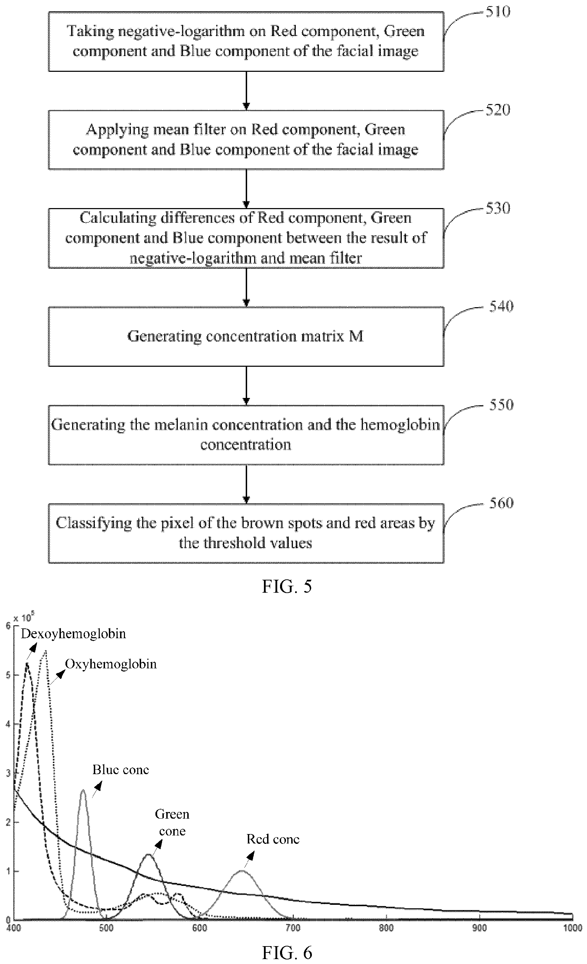

As illustrated in FIG. 5, the density of melanin and hemoglobin for each pixel on the input image can be estimated by follow steps:

510: taking negative-logarithm on R, G, B components to obtain log R, log G and log B layers.

520: applying mean filter on R, G, B components to obtain $\overline{logR}, \overline{logG}, \overline{logB}$ layers.

530: denoting a matrix for R, G, B components as $\begin{bmatrix} \tilde{R} \\ \tilde{G} \\ \tilde{B} \end{bmatrix} = \begin{bmatrix} logR - \overline{logR} \\ logG - \overline{logG} \\ logB - \overline{logB} \end{bmatrix}$. The matrix indicates the difference of the Red component, Green component and Blue component between the result of negative-logarithm and mean filter.

540: generating concentration matrix M using $M = \begin{bmatrix} \varepsilon_{mel}(\lambda_R) & \varepsilon_{hem}(\lambda_R) & 1 \\ \varepsilon_{mel}(\lambda_G) & \varepsilon_{hem}(\lambda_G) & 1 \\ \varepsilon_{mel}(\lambda_B) & \varepsilon_{hem}(\lambda_B) & 1 \end{bmatrix}$

550: generating the melanin concentration and the hemoglobin concentration expressed as Equation (2) below:

$$M^{-1} * [\tilde{R} \quad \tilde{G} \quad \tilde{B}]^T = [\tilde{\alpha}_{mel} \quad \tilde{\alpha}_{hem} \quad log\tilde{\gamma}]^T \tag{2}$$

FIG.6 illustrates spectral absorption of melanin and hemoglobin from 400nm to 1,000nm, and their relation with spectral responses of conventional RGB digital cameras.

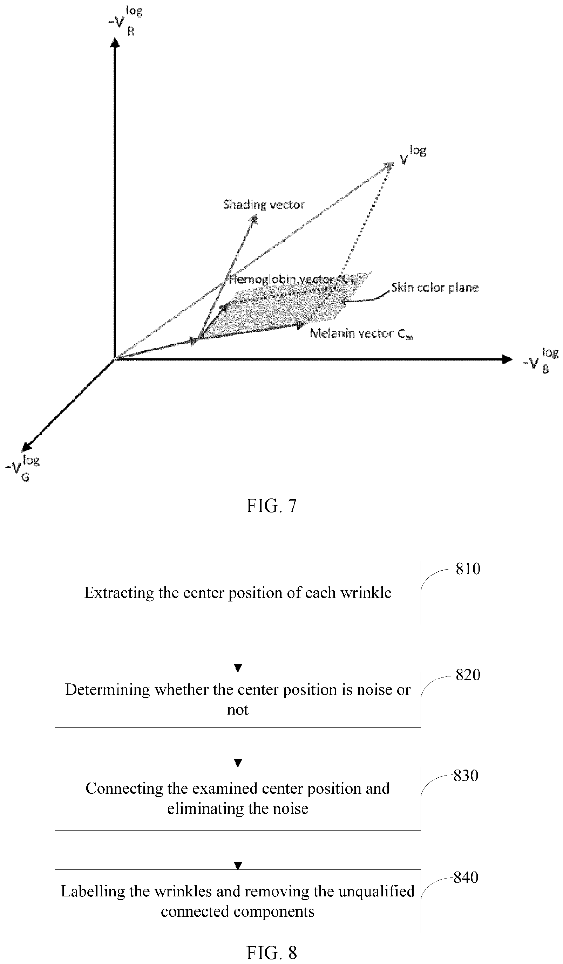

FIG.7 illustrates the projection of the skin image signals onto the skin color plane which is formed by the two principal components, melanin and hemoglobin.

560: classifying the pixel of the brown spots and red areas by the threshold values. The threshold is an empirical value, which may defined by skilled technicians according to the practical situation.

The wrinkles count analyzing is focused on the forehead, glabella lines and under eyes of the facial image.

In one embodiment, the subtle curvilinear discontinuities in skin texture can be highlighted by Gabor filter bank. The subtle curvilinear discontinuity usually caused by wrinkles.

Then, the curvilinear shape of wrinkles at image sites of large Gabor filter responses could be localized by the image morphology used to incorporate geometric constraints.

As illustrated in FIG. 8, the wrinkles from the processed image can be localized by follow steps:

810: extracting the center position of each wrinkle by calculating local maximum curvatures in cross-sectional profiles.
820: determining whether the center position is noise or not, according to the neighboring pixel values.

For instance, if current pixel has a relatively small value but neighboring pixels have large values, the current pixel value should be increased to connect a line. However, if current pixel has a relatively large value but neighboring pixels have small values, the current pixel value should be reduced to eliminate noise.

830: connecting the examined center position and eliminating the noise.

840: labelling the wrinkles and removing the unqualified connected components.

For example, the connected component is isolated, too small, or having an eccentricity of less than 0.95.

The interest region of the sagging seriousness includes under eyes, nasolabial fold, mouth corner and jaw lines.

The sagging seriousness can be measured by the sagging score and analyzed by the convolutional neural network (CNN) which has been well known for image classification tasks.

In one embodiment, a CNN model could be tailor-made and trained using a sagging dataset which is comprised a plurality of sagging sample scored by expert.

Then, the trained CNN model could recognize the sagging score of the interest region of the input image.

Embodiments of the present disclosure further provide an electronic device. The electronic device may either have the function modules included in the primary device, or have the function modules of the secondary device, and may have all the function modules in both the primary device and the secondary device, such that the electronic device is used as the corresponding primary device or secondary device.

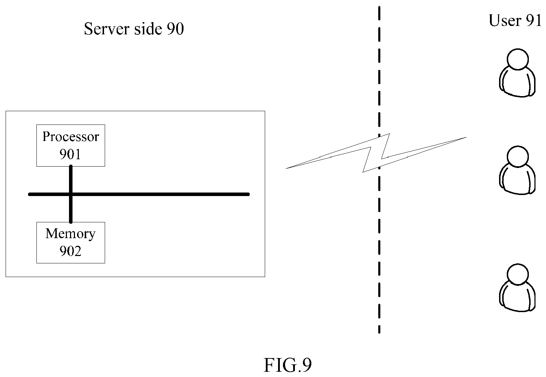

As illustrated in FIG. 9, the application environment of the method for facial skin age estimating includes: server side 90 and user 91.

The user 91 can use any suitable terminal (i.e. smart phone, laptop and computer) to connect with the server side 90 to upload the face image and receive the skin estimating result in any time.

the server side is consisted of one or several electronic device 9 included a processor 901 and a memory 902.

The memory 902, as a non-volatile computer-readable storage medium, may be configured to store non-volatile software programs, non-volatile computer-executable programs and modules.

The memory 902 stores an instruction program that is executable by the processor 901 and the processor 901 executes the instruction program to cause the processor 901 to implement the method for skin age estimating as disclosed below.

In one embodiment, the data or instruction program stored in the server side 90 can be adjusted to enhance the accuracy of the skin estimated result. For example, the benchmarks can be tuned during the data collection.

Professional personnel should be further aware that with reference to the embodiments of the present application disclosed herein, various exemplary Bluetooth communication steps may be implemented in the form of electronic hardware, computer software or a combination thereof. To clearly describe interchangeability between the hardware and software, the above description has generally illustrated the compositions and steps of the various example according to the functions. Whether such functions are implemented in the form of software or hardware depends on the specific application and the design restrictions applied to the entire system.

Professional technical personnel may implement the described functions by using different methods for each specific application. However, such implementation shall not be deemed as going beyond the scope of the present disclosure. The computer software program may be stored in a computer readable storage medium, wherein the computer software program, when being executed, may perform the steps and processes according to the above method embodiments. The storage medium may be any medium capable of storing program codes, such as read-only memory (ROM), a random-access memory (RAM), a magnetic disk, or a compact disc-read only memory (CD-ROM).

Described above are exemplary embodiments of the present disclosure, but are not intended to limit the scope of the present disclosure. Any equivalent structure or equivalent process variation made based on the specification and drawings of the present disclosure, which is directly or indirectly applied in other related technical fields, fall within the scope of the present disclosure.

**Claims**

1. A method for image preprocessing, comprising:

   resizing an input image;
   importing a reference image;
   converting the input image and the reference image from RGB color space to CIELAB color space;
   adjusting illumination component and color component of the input image depending on the reference image;
   recovering the adjusted input image from CIELAB color space to RGB color space.

2. The method according to claim 1, wherein adjusting illumination of the input image depending on the reference image comprises:

   dividing the illumination component of the input image into an input detailed layer and an input blurred layer;
   extracting a reference blurred layer from the illumination component of the reference image;
   transferring the input blurred layer according to the reference blurred layer;
   combining the transferred input blurred layer and the input detailed layer to generate a transferred illumination component.

3. The method according to claim 2, wherein adjusting color of the input image depending on the reference image comprises:
   standardizing the color component of the input image depending on the color component of the reference image.

4. A method for facial skin age estimating, comprising:

   resizing and aligning a facial image;
   converting the facial image and a reference image from RGB color space to CIELAB color space;
   adjusting illumination component and color component of the facial image depending on the reference image;
   recovering the adjusted facial image from CIELAB color space to RGB color space;
   analyzing a plurality of evaluation index for assessing skin condition on interest area of the facial image;
   estimating the skin age of the facial image, according to the evaluation index.

5. The method according to claim 4, wherein estimating the skin age of the facial image, according to the evaluation index comprises:

   generating a benchmark from modeling the relationship between mean value of the evaluation index and an age group;
   comparing the evaluation index of the facial image with the benchmark;
   determining the age group corresponding to the image according to the comparison result of the facial image and the benchmark.

6. The method according to claim 4, wherein the evaluation index comprises melanin concentration, hemoglobin concentration, wrinkles count and sagging seriousness.

7. The method according to claim 6, wherein the interest area corresponding to the melanin concentration and the hemoglobin concentration, is the whole facial image excluding mouth area and chin area.

8. The method according to claim 7, wherein analyzing the melanin concentration and the hemoglobin concentration on interest area of the facial image comprises:

taking negative-logarithm on Red component, Green component and Blue component of the facial image, respectively;

applying mean filter on Red component, Green component and Blue component of the facial image, respectively;

calculating differences of Red component, Green component and Blue component between the result of negative-logarithm and mean filter, respectively

generating the melanin concentration and the hemoglobin concentration, according to the absorption spectra of the melanin and the hemoglobin and the differences of Red component, Green component and Blue component.

9. The method according to claim 6, wherein analyzing a plurality of evaluation index for assessing skin condition on interest area of the facial image comprises:

highlighting a subtle curvilinear discontinuity on forehead, glabella lines and under eyes of the facial image by Gabor filter;

localizing a curvilinear shape of wrinkles at the facial image of the subtle curvilinear discontinuities.

10. The method according to claim 6, wherein analyzing a plurality of evaluation index for assessing skin condition on interest area of the facial image comprises:

training a convolutional neural network by a sagging dataset which is comprised a plurality of sagging sample scored by expert;

recognizing the score of the sagging seriousness on under eyes, nasolabial fold, mouth corner and jaw lines of the facial image, by the trained convolutional neural network.

11. The method according to claim 4, wherein the facial image is taken from portable devices.

12. An electronic device, comprising:

a memory, a communication module and a processor coupled to the memory and the communication module;

the memory storing instructions that are executable by the processor, wherein execution of the instructions by the processor causes the processor via the communication module to perform the method according to any one of claims 4-11.

Receiving a reference image and an input image — 110

Resizingthe input image — 120

Converting the input image and the reference image from RGB color space to CIELAB color space — 130

Adjusting illumination component and color component of the input image depending on the reference image — 140

Recovering the adjusted input image from CIELAB color space to RGB color space — 150

FIG. 1

Input image

Reference image

Illumination component

Detailed layer

Transferred illumination component

Blurred layer

Preprocessed input image

Color component

Adjusted color component

FIG. 2

FIG. 3

FIG. 4

```
┌──────────────────────────────────────────────────┐
│  Taking negative-logarithm on Red component, Green │─── 510
│  component and Blue component of the facial image  │
└──────────────────────────────────────────────────┘
                        │
                        ▼
┌──────────────────────────────────────────────────┐
│     Applying mean filter on Red component, Green   │─── 520
│  component and Blue component of the facial image  │
└──────────────────────────────────────────────────┘
                        │
                        ▼
┌──────────────────────────────────────────────────┐
│   Calculating differences of Red component, Green  │─── 530
│ component and Blue component between the result of │
│        negative-logarithm and mean filter          │
└──────────────────────────────────────────────────┘
                        │
                        ▼
┌──────────────────────────────────────────────────┐
│            Generating concentration matrix M       │─── 540
└──────────────────────────────────────────────────┘
                        │
                        ▼
┌──────────────────────────────────────────────────┐
│ Generating the melanin concentration and the hemoglobin │─── 550
│                   concentration                    │
└──────────────────────────────────────────────────┘
                        │
                        ▼
┌──────────────────────────────────────────────────┐
│ Classifying the pixel of the brown spots and red areas by │─── 560
│                 the threshold values               │
└──────────────────────────────────────────────────┘
```

FIG. 5

FIG. 6

FIG. 7

| | |
|---|---|
| Extracting the center position of each wrinkle | 810 |
| Determining whether the center position is noise or not | 820 |
| Connecting the examined center position and eliminating the noise | 830 |
| Labelling the wrinkles and removing the unqualified connected components | 840 |

FIG. 8

Server side 90

User 91

Processor
901

Memory
902

FIG.9

Europäisches
Patentamt

European
Patent Office

Office européen
des brevets

# EUROPEAN SEARCH REPORT

Application Number

EP 20 19 5367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REINHARD: "Color transfer between images", IEEE COMPUTER GRAPHICS AND APPLICATIONS, vol. 21, no. 4, 1 January 2001 (2001-01-01), page 34, XP055011470, ISSN: 0272-1716, DOI: 10.1109/38.946629 | 1 | INV. G06K9/46 G06K9/00 G06K9/62 |
| Y | * section entitled "Decorrelated color space"; | 2,3 | |
| A | page 34 - page 36 * * section entitled "Statistics and color correction"; page 36 - page 37 * | 4-12 | |
| Y | DONG GUO ET AL: "Digital face makeup by example", 2017 IEEE CONFERENCE ON COMPUTER VISION AND PATTERN RECOGNITION (CVPR), 1 January 2009 (2009-01-01), pages 73-79, XP055365800, US ISSN: 1063-6919, DOI: 10.1109/CVPR.2009.5206833 * section 3.2 * * figure 2 * | 2,3 | |
| X | HORNG W B ET AL: "Classification of age groups based on facial features", TAMKANG JOURNAL OF SCIENCE AND ENGINEERING - DANJIANG LIGONGXUEKAN, TAMKANG UNIVERSITY, TAIPEI, TW, vol. 4, no. 3, 1 January 2001 (2001-01-01), pages 183-192, XP007903791, ISSN: 1560-6686 * abstract * * sections 5 and 6 * | 4-12 | |

TECHNICAL FIELDS SEARCHED (IPC)

G06K

-/--

The present search report has been drawn up for all claims

| Place of search | Date of completion of the search | Examiner |
|---|---|---|
| The Hague | 7 June 2021 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

## EUROPEAN SEARCH REPORT

Application Number

EP 20 19 5367

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GRUNDLAND MARK ET AL: "Color histogram specification by histogram warping", PROCEEDINGS OF SPIE, vol. 5667, 17 January 2005 (2005-01-17), pages 610-621, XP055810642, Orlando, Florida ISSN: 0277-786X, DOI: 10.1117/12.596953 ISBN: 978-1-5106-4059-7 * sections 1 and 2 * | 4-12 | |
| A | US 2017/351905 A1 (WANG XIAOLONG [US] ET AL) 7 December 2017 (2017-12-07) * paragraph [0056] - paragraph [0069] * | 4-12 | |
| A | HIRONORI TAKIMOTO ET AL: "Robust gender and age estimation under varying facial pose", ELECTRONICS AND COMMUNICATIONS IN JAPAN, SCRIPTA TECHNICA. NEW YORK, US, vol. 91, no. 7, 1 July 2008 (2008-07-01), pages 32-40, XP001523122, DOI: 10.1002/ECJ.10125 * section 4.1 * * sections 3.1, 3.2 and 3.3 * | 4-12 | |
| | | | TECHNICAL FIELDS SEARCHED (IPC) |
| A | NISHIDATE IZUMI ET AL: "Estimation of Melanin and Hemoglobin Using Spectral Reflectance Images Reconstructed from a Digital RGB Image by the Wiener Estimation Method", SENSORS, vol. 13, no. 6, 1 January 2013 (2013-01-01), pages 7902-7915, XP055810584, DOI: 10.3390/s130607902 Retrieved from the Internet: URL:https://www.ncbi.nlm.nih.gov/pmc/articles/PMC3715247/pdf/sensors-13-07902.pdf> * sections 2 and 3 * | 6-10 | |

The present search report has been drawn up for all claims

| Place of search | Date of completion of the search | Examiner |
|---|---|---|
| The Hague | 7 June 2021 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 20 19 5367

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-3

        Invention 1 is directed to applying preprocessing on the
        input image based on a reference image.
                         ---

2. claims: 4-12

        Invention 2 is directed to estimating facial skin age.
                         ---
```

## ANNEX TO THE EUROPEAN SEARCH REPORT
## ON EUROPEAN PATENT APPLICATION NO.

EP 20 19 5367

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2021

| Patent document cited in search report | | Publication date | Patent family member(s) | | Publication date |
|---|---|---|---|---|---|
| US 2017351905 | A1 | 07-12-2017 | CN | 109564618 A | 02-04-2019 |
| | | | EP | 3461290 A1 | 03-04-2019 |
| | | | US | 2017351905 A1 | 07-12-2017 |
| | | | WO | 2017213398 A1 | 14-12-2017 |

EPO FORM P0459

For more details about this annex : see Official Journal of the European Patent Office, No. 12/82